Europäisches Patentamt

European Patent Office

Office européen des brevets

(11) Veröffentlichungsnummer: **0 346 690**

**A1**

## (12) EUROPÄISCHE PATENTANMELDUNG

(21) Anmeldenummer: 89109884.0

(51) Int. Cl.⁴: **F16C 35/07**

(22) Anmeldetag: 01.06.89

(30) Priorität: 15.06.88 DE 3820308

(43) Veröffentlichungstag der Anmeldung:
20.12.89 Patentblatt 89/51

(84) Benannte Vertragsstaaten:
DE FR GB

(71) Anmelder: FORD-WERKE
AKTIENGESELLSCHAFT
Werk Köln-Niehl Henry-Ford-Strasse
Postfach 60 40 02
D-5000 Köln 60(DE)

(84) DE

Anmelder: FORD MOTOR COMPANY LIMITED
Eagle Way
Brentwood Essex CM13 3BW(GB)

(84) GB

Anmelder: FORD FRANCE SOCIETE ANONYME
344 Avenue Napoléon Bonaparte B.P. 307
F-92506 Rueil Malmaison Cedex(FR)

(84) FR

(72) Erfinder: Premiski, Vladimir
Fliederstrasse 23
D-5358 Bad-Münstereifel-Willerscheidt(DE)
Erfinder: Premiski, Claudia
Fliederstrasse 23
D-5358 Bad-Münstereifel-Willerscheidt(DE)

(74) Vertreter: Ritzkowsky, Harald, Dipl.-Ing. et al
Ford-Werke Aktiengesellschaft
Patentabteilung NH/DRP Henry-Ford-Strasse
D-5000 Köln 60(DE)

(54) **Wälzlager-Axialfestlegung.**

(57) Bei einer Wälzlager-Axialfestlegung mittels einer sich mit ihrem einen Umfang nach axialer Rückformung an dem den Laufring aufnehmenden Bauteil abstützenden ringförmige Sicherungsscheibe sind Aufnahmenuten (10 und 11) an den außenliegenden Stirnseiten (8 und 9) des Außen- und/ oder des Innenlaufringes (4 bzw. 5) eines Wälzlagers (1) angeordnet und die Festlegungsringe (12 und 13) sind als tellerfederartig gestaltete Scheibenringe (12 und 13) mit nach außen bzw. nach innen gerichteten meanderförmigen Zähnen (14 bzw. 17) ausgebildet und der Innenumfang bzw. der Außenumfang wird mittels eines Rollwerkzeuges in die Aufnahmenuten unter radialem Übermaß eingedrückt.

FIG.1

## Wälzlager-Axialfestlegung

Die Erfindung bezieht sich auf eine Wälzlager-Axialfestlegung der im Oberbegriff des Patentanspruches 1 erläuterten Art.

Aus der DE-PS 26 29 436 ist eine Wälzlager-Axialfestlegung mittels einer sich mit ihrem einen Umfang nach axialer Rückformung an dem den Laufring aufnehmenden Bauteil radial abstützenden ringförmigen Sicherungsscheibe bekannt.

Bei dieser bekannten Wälzlager-Axialfestlegung kann eine Aufnahmenut am Wellenbauteil und/oder in der Gehäusebohrung vorgesehen werden, um den Innen- oder Außenumfang der ringförmigen Befestigungsscheibe formschlüssig abzustützen.

Die bekannte Wälzlager-Axialfestlegung weist den Nachteil auf, daß am Wellenbauteil oder in der Gehäusebohrung Aufnahmenuten vorgesehen werden müssen und daß eine Selbstverstärkung der Haltekraft bei axialer Belastung des Wälzlagers nicht erreicht wird.

Aus der DE-OS 31 11 689 ist eine Wälzlager-Axialfestlegung mittels eines sich mit seinem einen Ende an einer Nut an einem Laufring und mit seinem anderen Ende an einer Nut an dem den Laufring aufnehmenden Bauteil axial abstützenden Befestigungsringes bekannt, dessen eines Ende bei axialem Übermaß durch ein Werkzeug in die Nut am Bauteil eingedrückt wird.

Bei dieser bekannten Wälzlager-Axialfestlegung ist eine Aufnahmenut sowohl am Innenumfang und/oder am Außenumfang des Innen- bzw. Außenlaufringes eines Wälzlagers erforderlich und darüber hinaus ist am Wellenbauteil und/oder in der Gehäusebohrung eine radial eingearbeitete Aufnahmenut erforderlich, um den geschlitzten rohrförmigen Befestigungsring durch ein radial wirkendes Werkzeug bei axialem Übermaß in die Aufnahmenuten in den Bauteilen eindrücken zu können.

Die bekannte Wälzlager-Axialfestlegung weist somit den Nachteil auf, daß eine Aufnahmenut nicht nur an den Laufringen des Wälzlagers sondern auch an den Bauteilen vorgesehen werden muß.

Aus der DE-OS 33 29 179 ist eine Wälzlager-Axialfestlegung nur für den Bereich einer Aufnahmebohrung bekannt, wobei sich ein als tellerfederartig gestalteter Scheibenring mit meanderförmigen Zähnen einerseits mit einer Reihe von Zähnen an dem äußeren Laufring eines Wälzlagers und mit einer anderen Anzahl von Zähnen am Innenumfang der Aufnahmebohrung kraftschlüssig abstützt.

Die bekannte Wälzlager-Axialfestlegung ist wie in der Schrift darauf hingewiesen wird, lediglich für axial niedrig beanspruchte Außenringe von Wälzlagern geeignet.

Aus den DE-OS 33 05 419 und DE-OS 35 14 142 sind Wälzlager-Axialfestlegungen bekannt, bei denen tellerfederartig gestaltete Scheibenring mit nach außen gerichteten meanderförmigen Zähnen einerseits den Außenring eines Wälzlagers abstützen und sich mit den nach außen gerichteten meanderförmigen Zähnen am Innenumfang der Aufnahmebohrung verspreizend und somit nahezu formschlüssig abstützen.

Diese bekannten Wälzlager-Axialfestlegungen weisen den Nachteil auf, daß sie als getrennte Bauteile an der Welle oder in der Gehäusebohrung montiert werden müssen, was Schwierigkeiten durch verkantete Montage ergeben kann.

Die Aufgabe der Erfindung ist es, eine Wälzlager-Axialfestlegung der im Oberbegriff des Patentanspruches 1 erläuterten Art derart zu verbessern, daß entsprechende Aufnahmenuten für entsprechende Festlegungsringe nur an den Laufringen des Wälzlagers vorgesehen werden müssen, wohingegen an den das Wälzlager aufnehmenden Bauteilen, dem Wellenbauteil oder dem Gehäusebauteil keinerlei Nutenanordnungen erforderlich sind. Darüber hinaus soll die Wälzlager-Axialfestlegung mit dem entsprechenden Wälzlager zu einer Baueinheit zusammengefaßt werden, die die Montage erheblich vereinfacht.

Gemäß der Erfindung wird diese Aufgabe gelöst, indem Aufnahmenuten an den außenliegenden Stirnseiten des Innen-und/oder des Außenlaufringes eines Wälzlagers angeordnet sind und die Festlegungsringe als tellerfederartig gestaltete Scheibenringe mit nach innen bzw. außen gerichteten meanderförmigen Zähnen ausgebildet sind und der Innenumfang bzw. der Außenumfang der Scheibenringe mittels eines Rollwerkzeuges in die Aufnahmenuten unter radialem Übermaß eingedrückt werden.

Dadurch wird sichergestellt, daß der Innenumfang bzw. der Außenumfang der Scheibenringe ohne radialem Spiel in den Aufnahmenuten angeordnet werden kann.

In den Ansprüchen 2 und 3 sind weitere zweckmäßige Ausgestaltungen der Erfindung erläutert.

Dadurch, daß der tellerfederartige Scheibenring während des Eindrückens durch das Rollwerkzeug in Aufnahmenuten eine flachere Tellerform einnehmend bleibend verformt wird, kann auch bei größeren Toleranzlagen eine frei von radialem Spiel gehaltene Aufnahme der Innenumfänge bzw. Außenumfänge der Scheibenringe in den Aufnahmenuten sichergestellt werden.

Dadurch, daß der tellerfederartige Scheibenring nach Montage der Wälzlager-Außen- und Innenlaufringe durch ein Rollwerkzeug im Bereich seiner Zähne axial beaufschlagt wird, bis die Radialenden der Zähne sich mit Selbsthemmung an den Bauteiloberflächen abstützen, kann jede auch noch so geringe axiale Federbewegung ausgeschlossen werden.

Dadurch, daß der tellerfederartige Scheibenring im Bereich seines Innen- bzw. Außenumfanges mit einer Schwächungs- oder Sollbruchstelle versehen ist, kann er zur Demontage des Wälzlagers durch Einwirkung eines Werkzeuges zerstört werden, d.h. radial getrennt werden und hierdurch wird die geschlossene radiale Abstützwirkung aufgehoben und der Befestigungsring kann mittels einer Zange oder dergleichen entfernt werden, worauf das Wälzlager in üblicher Weise abgezogen werden kann.

Die Erfindung wird anhand eines Ausführungsbeispieles näher erläutert. Es zeigt:

Fig. 1 einen vertikalen Schnitt durch eine Kettenradlagerung mit einem Rollenlager mit der erfindungsgemäßen Axialfestlegung;

Fig. 1a und 1b Vergrößerungen aus den Kreisen Y und Z in Fig. 1;

Fig. 2 einen vertikalen Schnitt durch einen inneren Scheibenring;

Fig. 2a und 2b vergrößerte Darstellungen des Ringes nach Fig. 2 im Bereich der Schwach- oder Sollbruchstelle mit unterschiedlichen Ausführungen;

Fig. 3 einen vertikalen Schnitt durch einen äußeren Scheibenring und

Fig. 3a und 3b vergrößerte Darstellungen des Bereiches der Schwach- bzw. Sollbruchstelle mit unterschiedlichen Ausführungen.

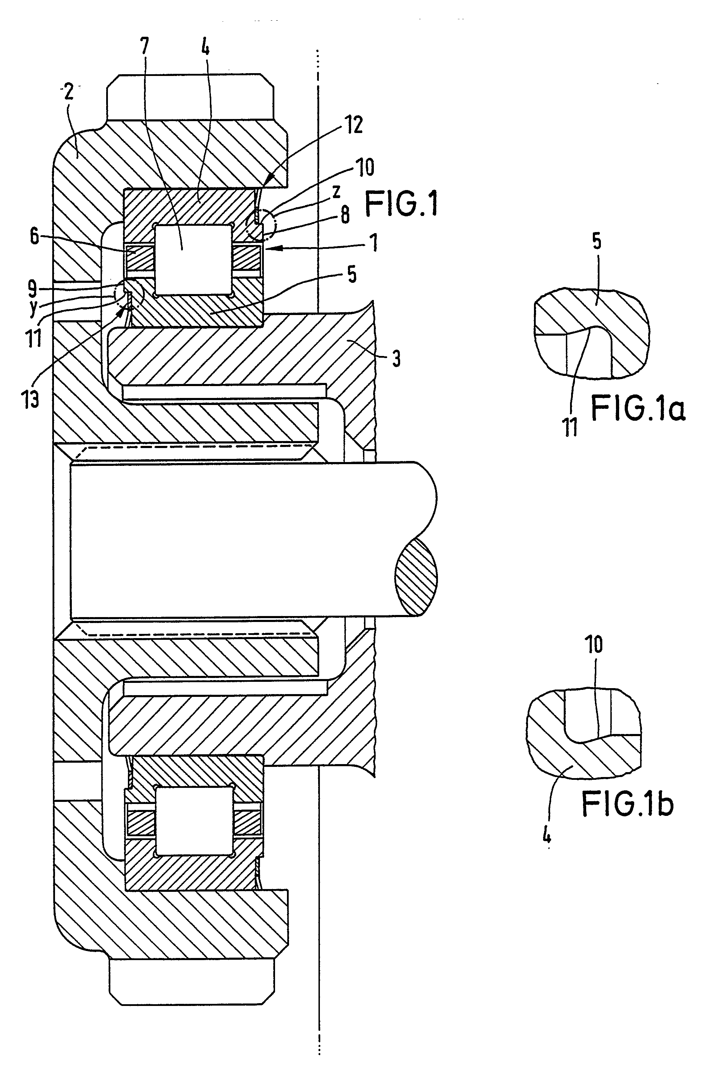

Bei der in Fig. 1 gezeigten Wälzlager-Axialfestlegung soll ein Rollen-Wälzlager 1 in einem Gehäuse- oder Aufnahmebauteil 2 sowie auf einen Wellenbauteil 3 axial unverrückbar und hochbelastbar festgelegt werden.

Das Rollen-Wälzlager 1 besteht hierbei in üblicher Weise aus einem Außenlaufring 4, einem Innenlaufring 5 und einer Vielzahl von durch einen Käfigbauteil 6 geführten Rollen 7.

Der Außenlaufring 4 und der Innenlaufring 5 sind jeweils an ihren außen liegenden Stirnseiten 8 und 9 mit Aufnahmenuten 10 und 11 versehen, deren Nutenform in den Fig. 1a und 1b in vergrößerter Darstellung gezeigt sind.

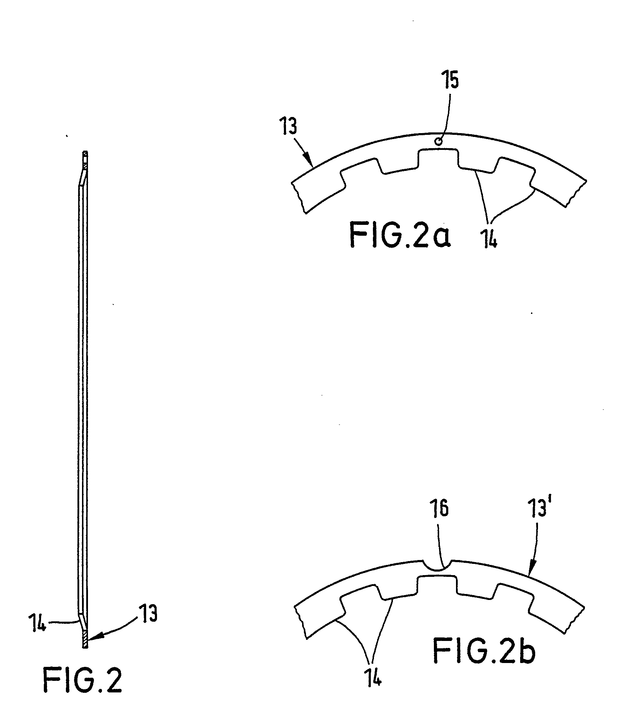

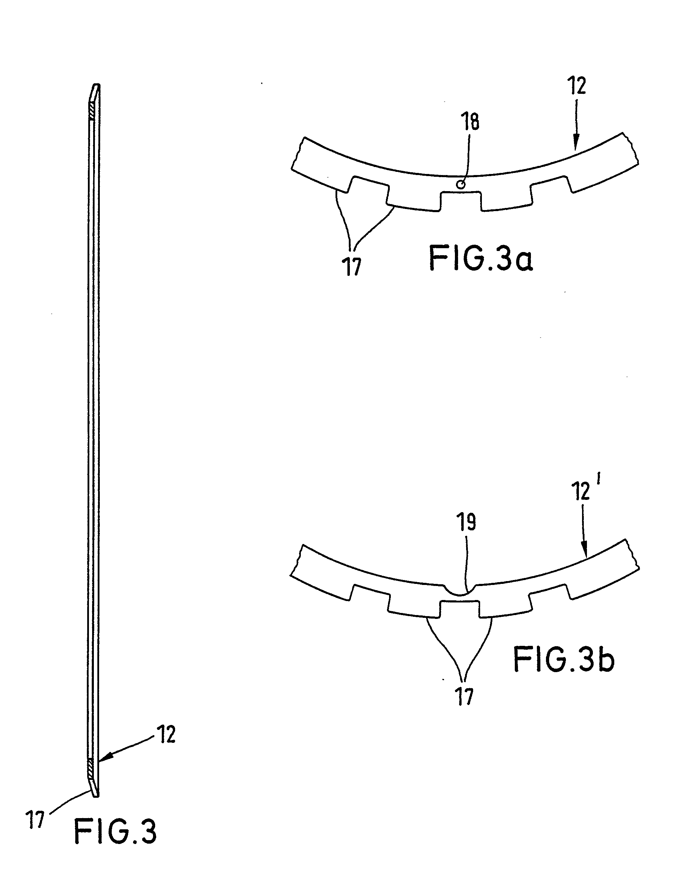

In den Aufnahmenuten 10 und 11 werden tellerfederartig gestaltete Scheibenringe 12 und 13 aufgenommen, deren Form in Zusammenhang mit den Fig. 2 und 3 erläutert wird.

Der innere Scheibenring 13 weist einen ebenen Außenumfang auf und einen Innenumfang, an dem nach innen und schräg entgegen der Montagerichtung, geneigte meanderförmige Zähne 14 ausgebildet sind. Im Bereich des ebenen Außenumfanges ist an einer Stelle eine Schwachstelle 15 oder eine Sollbruchstelle 16 vorgesehen.

Der äußere Scheibenring 12 weist einen ebenen Innenumfang auf und einen Außenumfang an dem nach außen und schräg entgegen der Montagerichtung, ausgestellte meanderförmige Zähne 17 ausgebildet sind. Der Innenumfang des Scheibenringes 12 ist hierbei an einer Stelle mit einer Schwachstelle 18 oder einer Sollbruchstelle 19 versehen.

Die Wälzlager-Axialfestlegung wird in einen am Wälzlager vormontierten Zustand gebracht indem der Innenumfang des äußeren Scheibenringes 12 und der Außenumfang des inneren Scheibenringes 13 mittels eines Rollwerkzeuges bei radialem Übermaß in die Aufnahmenuten 10 und 11 eingedrückt werden. Hierdurch werden die Scheibenringe sowoh in radialer als auch in axialer Richtung spielfrei in den Aufnahmenuten in den Laufringen des Wälzlagers zentriert und fixiert.

Wird nun ein solches Wälzlager-Axialfestlegungs-Bauteil in der Gehäusebohrung des Bauteiles 2 montiert, so kann der entsprechende Außenlaufring 4 in üblicher Weise in die Aufnahmebohrung eingepreßt werden. Die etwas nach außen ausgestellten Zähne ermöglichen hierbei die Aufpreßbewegung und sorgen unmittelbar nach Beendigung der Aufpreßbewegung für eine axial Festlegung. In ähnlicher Weise kann das Wellenbauteil 3 in den Innenlaufring 5 des Wälzlagers eingepreßt werden, wobei gleichfalls wieder die nach außen ausgestellten Zähne die Einpreßbewegung ermöglichen und danach sofort eine Axialfestlegung herstellen.

Für normale Belastungsfälle ist damit bereits die Axialfestlegung ausreichend sichergestellt.

Für Anwendungsfälle, bei denen erhebliche und oszillierende Axiallasten auftreten, kann als ergänzende Maßnahme bei der bereits an den Bauteilen montierten Wälzlager Axialfestlegungs-Anordnungen der Zahnbereich der Scheibenringe durch ein Rollwerkzeug noch axial nachgedrückt werden um eine radiale Abstützung der Zähne im Bereich der Selbsthemmung an den Bauteiloberflächen herzustellen.

Zur Demontage der Axialfestlegung können durch entsprechende Schneidwerkzeuge die Schwach- bzw. Sollbruchstellen 15 bzw. 16 und 18 bzw. 19 radial aufgetrennt werden, wodurch die Scheibenringe mittels einer Zange aus ihrer radialen Abstützlage entfernt werden können, worauf dann die Laufringe des Wälzlagers in üblicher Weise abgezogen werden können.

Die Wälzlager-Axialfestlegung ist in besonders günstiger Weise anwendbar, wenn an den entsprechenden Gehäuse- oder Wellenbauteilen nur sehr beengte Platzverhältnisse für Axialsicherungsringe der üblichen Bauart vorhanden sind und vor allem dann, wenn mit vergleichsweise geringem Aufwand eine absolut spielfreie Axialfestlegung erfolgen soll.

Bei dieser Wälzlager-Axialfestlegung werden die Aufnahmebauteile für das Wälzlager, das Gehäuse- und das Wellen bauteil nicht durch Nuten geschwächt und können somit in geringerer Materialstärke ausgelegt und gefertigt werden, wodurch in beengten Platzverhältnissen günstige Bauteildimensionierungen möglich sind.

**Ansprüche**

1. Wälzlager-Axialfestlegung mittels einer sich mit ihrem einen Umfang nach axialer Rückformung an dem den Laufring aufnehmenden Bauteil abstützenden ringförmigen Sicherungsscheibe, **dadurch gekennzeichnet**, daß Aufnahmenuten (10 und 11) an den außenliegenden Stirnseiten (8 und 9) des Außen- und/ oder des Innenlaufringes (4 bzw. 5) eines Wälzlagers (1) angeordnet sind und die Festlegungsringe als tellerfederartig gestaltete Scheibenringe (12 und 13) mit nach außen- bzw. nach innengerichteten, meanderförmigen Zähnen (17 bzw. 14) ausgebildet sind und der Innenumfang bzw. der Außenumfang der Scheibenringe (12 bzw. 13) mittels eines Rollwerkezeuges in die Aufnahmenuten (10 bzw. 11) unter radialem Übermaß eingedrückt werden.

2. Wälzlager-Axialfestlegung nach Anspruch 1, **dadurch gekennzeichnet**, daß die tellerfederartigen Scheibenringe (12 und 13) während des Eindrückens durch das Rollwerkzeug auf eine flachere Tellerform bleibend verformt werden.

3. Wälzlager-Axialfestlegung nach den Ansprüchen 1 und 2, **dadurch gekennzeichnet**, daß die tellerfederartigen Scheibenringe (12 und 13) nach der Montage des Wälzlagers (1) durch ein Rollwerkzeug in den Bereichen ihrer Zähne (17 bzw. 14) axial nachgedrückt werden, bis sich die Radialenden der Zähne (17 bzw. 14) mit Selbsthemmung an den Bauteiloberflächen abstützen.

4. Wälzlager-Axialfestlegung nach den Ansprüchen 1 bis 3, **dadurch gekennzeichnet**, daß die tellerfederartigen Scheibenringe (12 bzw. 13) in den Bereichen ihrer Innen- bzw. Außenumfänge mit einer Schwächungs- oder Sollbruchstelle (18 bzw. 19 und 15 bzw. 16) versehen sind.

FIG.1

FIG.1a

FIG.1b

FIG.2

FIG.2a

FIG.2b

FIG.3a

18

12

17

FIG.3b

19

12'

17

FIG.3

12

17

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 010 986  (SKF) <br> * Insgesamt * <br> --- | 1-3 | F 16 C  35/07 |
| Y | FR-A-2 114 130  (DUCELLIER) <br> * Seite 2, Zeilen 9-19; Figuren * <br> ----- | 1-3 | |

RECHERCHIERTE
SACHGEBIETE (Int. Cl.4)

F 16 C
F 16 B

Der vorliegende Recherchenbericht wurde für alle Patentansprüche erstellt

| Recherchenort | Abschlußdatum der Recherche | Prüfer |
|---|---|---|
| DEN HAAG | 12-09-1989 | ORTHLIEB CH.E. |